# EUROPÄISCHE PATENTSCHRIFT

(11) **EP 3 985 532 B1**
(45) Veröffentlichungstag und Bekanntmachung des Hinweises auf die Patenterteilung: **22.02.2023**
(21) Anmeldenummer: 20202646.4
(22) Anmeldetag: 19.10.2020
(51) Int. Cl.: G06F 21/33, H04L 9/32, H04L 9/40

(54) **ZERTIFIKATSMANAGEMENT FÜR TECHNISCHE ANLAGEN**
CERTIFICATE MANAGEMENT FOR TECHNICAL SYSTEMS
GESTION DES CERTIFICATS POUR INSTALLATIONS TECHNIQUES

(43) Veröffentlichungstag der Anmeldung: 20.04.2022
(73) Patentinhaber: Siemens Aktiengesellschaft, 80333 München (DE)
(72) Erfinder: Lutz, Benjamin Dr., 76327 Pfinztal (DE); Palmin, Anna, 76187 Karlsruhe (DE)

(56) Entgegenhaltungen:
- US-A1- 2007 294 526
- US-A1- 2018 323 977
- US-B2- 8 745 380

## Beschreibung

Die Erfindung betrifft ein Leitsystem für eine technische Anlage, insbesondere eine Fertigungs- oder Prozessanlage, mit den Oberbegriffsmerkmalen des Anspruchs 1. Außerdem betrifft die Erfindung ein Verfahren zum Betreiben einer technischen Anlage.

Im Umfeld der Automatisierung einer technischen Anlage wie beispielsweise einer Prozessanlage werden diverse Protokolle und Mechanismen für eine sichere Kommunikation zwischen den einzelnen Komponenten der technischen Anlage wie Automatisierungsgeräten, Clients oder Servern eingesetzt. Die meisten dieser sicheren Protokolle und Mechanismen erfordern die Verwendung sogenannter digitaler Zertifikate. Unter einem Zertifikat wird dabei in dem vorliegenden Dokument ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Die Zertifikate werden von einer Zertifizierungsstelle bzw. Zertifizierungsinstanz ausgestellt. Diese wird im Englischen als eine sogenannte "Issuing CA (Certification Authority)" bezeichnet. Eine derartige Zertifizierungsinstanz ist in der Regel stets online und stellt, basierend auf eingehenden Zertifikatsanträgen, Zertifikate für diverse Antragsteller aus, die sie mit ihrem eigenen Zertifizierungsinstanz-Zertifikat signiert. Die Vertrauenswürdigkeit der Zertifizierungsinstanz wird dadurch sichergestellt, dass ihr eigenes Zertifizierungsinstanz-Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die Root CA die meiste Zeit offline ist und nur dann - unter der Einhaltung strengster Sicherheitsvorkehrungen - aktiviert bzw. eingeschaltet wird, wenn sie ein Zertifikat für eine zugehörige Zertifizierungsinstanz ausstellen soll.

Es kann vorkommen, dass eine Revokation eines Zertifikats bzw. gleichzeitig mehrerer Zertifikate notwendig ist. Eine solche Revokation eines von einer Zertifizierungsinstanz (engl. Issuing Certification Authority, kurz: CA) für eine Anlagenkomponente ausgestellten Zertifikats führt immer dazu, dass dieses Zertifikat von der zuständigen Zertifizierungsinstanz auf eine sogenannte Sperrliste (engl. Certificate Revocation List, kurz: CRL), die alle nicht mehr gültigen Zertifikate enthält, gesetzt wird.

Die aktualisierte bzw. neu ausgestellte Sperrliste wird von der zugehörigen bzw. zuständigen Zertifizierungsinstanz unter Verwendung ihres privaten Schlüssels (engl. Private Key) signiert und gilt somit als vertrauenswürdig.

Es kann erforderlich sein, dass die Revokation von Zertifikaten möglichst umgehend bzw. sofort erfolgen muss. Ein Beispiel hierfür ist ein defektes und nicht mehr reparierbares Gerät, das von dem Netzwerk einer Prozessanlage getrennt werden soll. Hier kann es aus Security-Gründen sinnvoll sein, das von dem Gerät verwendete Zertifikat (oder die Zertifikate) auf die entsprechende Sperrliste zu setzen und somit ungültig zu machen.

Durch eine umgehende Revokation der Zertifikate wird es ermöglicht, dass das Gerät einerseits nicht mehr innerhalb der Prozessanlage (unter Verwendung seiner operativen Zertifikate) kommunizieren kann und andererseits auch außerhalb der Prozessanlage (unter Verwendung seines Herstellerzertifikats) nicht mehr provisioniert werden kann.

Damit die Anlagenkomponenten ihre Zertifikate gegenseitig erfolgreich validieren können, muss jede der Komponenten die Vertrauenskette (engl. Trust Chain) jeweils der anderen Komponenten vorliegen. Dabei besteht die Vertrauenskette zu einem Zertifikat aus dem Zertifikat der Zertifizierungsinstanz, die dieses Zertifikat ausgestellt hat und aus den Zertifikaten der zugehörigen übergeordneten Intermediate CAs und der zugehörigen Root CA. Bei der gegenseitigen Zertifikatsvalidierung werden von den Komponenten die Zertifikate ihrer Kommunikationspartner sowie alle in der zugehörigen Vertrauenskette enthaltenen CA-Zertifikate validiert. Ein obligatorischer Schritt im Rahmen der Validierung ist die Validierung des Revokationsstatus des jeweiligen (CA-) Zertifikats. Dabei wird überprüft, ob das Zertifikat auf der zuvor beschriebenen, durch die zuständige Zertifizierungsinstanz ausgestellten (und signierten) Sperrliste (engl. Certificate Revocation List, CRL) veröffentlicht ist.

In der Regel wird die Sperrliste von der Zertifizierungsinstanz auf einem CRL-Verteilungspunkt (engl. CRL Distribution Point, CDP) abgelegt, dessen Adresse bzw. dessen URL in das Zertifikat übernommen wird. So kann im Prinzip jede Anlagenkomponente selbst den Revokationsstatus ihres eigenen Zertifikats sowie der Zertifikate ihrer Kommunikationspartners prüfen, indem sie die Sperrliste von dem CDP "holt" und prüft, ob die Sperrliste möglicherweise das jeweilige Zertifikat enthält.

Das durch vermehrte Zugriffe auf die CDPs entstehende, in der Regel sehr hohe Kommunikationsaufkommen kann dadurch reduziert werden, dass jede Sperrliste, die eine Anlagenkomponente im Rahmen der Zertifikatsvalidierung (im Schritt "Prüfung des Revokationsstatus eines Zertifikats") von einem Verteilungspunkt oder über einen Proxy "geholt" hat, anschließend im lokalen Cache der Anlagenkomponente abgelegt wird. Gemäß dem "Internet X.509 Public Key Infrastructure Certificate and Certificate Revocation List (CRL) Profile" (Request for Comments 5280 der Internet Engineering Task Force) wird bei der Prüfung der Gültigkeit eines Zertifikats (im Rahmen der Zertifikatsvalidierung) als erstes als geprüft, ob die dazu erforderliche Sperrliste lokal vorliegt und gültig ist (bevor auf einen CDP zugegriffen wird). Der Zeitpunkt, zu dem dieses lokale Caching der Sperrliste erfolgt, wird hier als der lokale CRL-Caching-Zeitpunkt bezeichnet.

Dadurch wird ermöglicht, dass die Anlagenkomponente bei der nächsten Zertifikatsvalidierung zuerst prüfen kann, ob die benötigte Sperrliste in ihrem lokalen Cache a) bereits enthalten ist und b) aktuell, d.h. noch nicht abgelaufen, ist. Somit ist der Zugriff auf den CDP oder den CDP-Proxy nur erforderlich, falls a) und/oder b) nicht erfüllt sind. Im Rahmen der Ermittlung der Aktualität der Sperrliste wird dabei geprüft, ob der aktuelle Zeitpunkt (hier als der Prüfzeitpunkt bezeichnet) zwischen den in der Sperrliste aufgeführten Zeitpunkten "This Update" und "Next Update" liegt. Dabei wird als "This Update" der Zeitpunkt, an dem diese Sperrliste veröffentlicht wurde, und durch "Next Update" der Zeitpunkt, wann die nächste Sperrliste ausgestellt werden wird, verstanden.

Dadurch, dass der Prüfzeitpunkt (als der Zeitpunkt der Prüfung des Revokationsstatus eines Zertifikats) zwischen dem Zeitpunkt "This Update" und dem in der zugehörigen Sperrliste aufgeführten geplanten Zeitpunkt "Next Update" liegt, soll ermöglicht werden, dass die Sperrliste zum Prüfzeitpunkt noch aktuell ist. Es ist jedoch trotzdem möglich, dass ein Zertifikat, dessen Revokationsstatus gerade geprüft wird, zwischen den beiden Zeitpunkten revoziert wurde. Dies bedeutet, dass die zugehörige Zertifizierungsinstanz (die das Zertifikat zu einem früheren Zeitpunkt ausgestellt hat) zwar den Revokationsantrag bereits erhalten hat und das Zertifikat daraufhin revoziert hat. Die aktualisierte Sperrliste wurde jedoch von der Zertifizierungsinstanz nicht sofort, sondern erst zu dem in der Sperrliste enthaltenen Zeitpunkt "Next Update" neu veröffentlicht.

Dies hat zur Folge, dass die betroffene Anlagenkomponente bei der erneuten Validierung dieses Zertifikats (das beispielsweise einem Kommunikationspartner der Anlagenkomponente gehört) "nicht mitbekommt", dass das Zertifikat inzwischen revoziert wurde, und dieses revozierte Zertifikat als gültig akzeptiert. Dadurch wird anschließend beispielsweise die Kommunikation mit einem Kommunikationspartner ermöglicht, der sich anhand des (eigentlich) revozierten (und somit nicht mehr gültigen) Zertifikats gegenüber der Anlagenkomponente authentifiziert. Dies kann unter Umständen eine bedeutende Schwachstelle im Hinblick auf Security bewirken, beispielsweise in dem Fall, dass die Revokation des Zertifikats infolge einer festgestellten Kompromittierung des zugehörigen Privaten Schlüssels (engl. Private Key) des Kommunikationspartners erfolgte.

Diesem Problem könnte damit begegnet werden, dass die Zertifizierungsinstanz (beispielsweise durch adäquate Einstellungen und/oder Skripte) dazu befähigt wird, eine Sperrliste sofort nach der erfolgten Revokation eines Zertifikats (zum Zeitpunkt "This Update") zu veröffentlichen. Die aktualisierte Sperrliste könnte anschließend unmittelbar an die Anlagenkomponenten verteilt werden. Hierbei könnte man vollständig (pauschal) auf das lokale Caching verzichten. Dies brächte allerdings den Nachteil mit sich, dass das Kommunikationsaufkommen in der technischen Anlage (besonders bei einer sehr hohen Anzahl von Kommunikationsbeziehungen) immens erhöht werden würde.

In der WO 2017/144056 A1 ist ein Verfahren zur Verbesserung der Informationssicherheit von Fahrzeug-zu-X Kommunikation offenbart, wobei die Fahrzeug-zu-X Kommunikation mittels zumindest eines Zertifikats absicherbar ist.

Die EP 3 287 925 A1 offenbart eine technische Anlage mit einer zertifikatsbasierten Kommunikationsabsicherung der Anlagenkomponenten.

Der Erfindung liegt die Aufgabe zugrunde, ein Leitsystem für eine technische Anlage anzugeben, dessen Zertifikatsmanagement ressourcenschonender betrieben werden kann, ohne dabei den Sicherheitslevel der technischen Anlage zu verringern.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch ein Verfahren zum Betreiben einer technischen Anlage, insbesondere einer Fertigungs- oder Prozessanlage, gemäß Anspruch 3. Vorteilhafte Weiterbildungen ergeben sich aus den abhängigen Ansprüchen.

Ein erfindungsgemäßes Leitsystem umfasst wenigstens eine Zertifizierungsinstanz und Anlagenkomponenten, wobei die Zertifizierungsinstanz für eine Ausstellung und eine Revokation von Zertifikaten für die Anlagenkomponenten zuständig ist, und wobei die Zertifizierungsinstanz dazu ausgebildet ist, eine Sperrliste über bereits revozierte Zertifikate zu erstellen, die in dem Leitsystem verteilbar ist, und wobei in dem Leitsystem ein Sperrlistendienst implementiert ist, welcher zur Verteilung der Sperrliste an die Anlagenkomponente ausgebildet und vorgesehen ist, und wobei die Anlagenkomponenten jeweils einen lokalen Speicher umfassen, in welchem die zuvor verteilte Sperrliste ablegbar ist. Das erfindungsgemäße Leitsystem ist dadurch gekennzeichnet, dass der Sperrlistendienst dazu ausgebildet ist, nach einer erfolgten Revokation eines Zertifikats einen Revokationsgrund zu ermitteln und, abhängig von dem Revokationsgrund, ein Entfernen einer zuvor verteilten und auf dem jeweiligen lokalen Speicher der Anlagenkomponenten hinterlegten Sperrliste und ein Hinterlegen einer nach der erfolgten Revokation neu erstellten Sperrliste in dem jeweiligen lokalen Speicher der Anlagenkomponenten zu bewirken.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall wenigstens eine erste Anlagenkomponente und eine zweite Anlagenkomponente. Zudem kann das Leitsystem sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei einer Anlagenkomponente kann es sich um einzelne Messumformer für Sensoren oder Steuergeräte für Aktoren der technischen Anlage handeln. Eine Anlagenkomponente kann aber auch ein Zusammenschluss mehrerer solcher Messumformer oder Steuergeräte sein, beispielsweise ein Motor, ein Reaktor, eine Pumpe oder ein Ventilsystem. Übergeordnete Geräte wie ein Automatisierungsgerät, ein Operator Station Server oder eine dezentrale Periphere sind ebenfalls unter dem Begriff "Anlagenkomponente" zu fassen. Ein Automatisierungsgerät ist dabei ein technisches Gerät, das zur Realisierung einer Automatisierung benutzt wird. Es kann sich dabei beispielsweise um eine speicherprogrammierbare Steuerung handeln, die eine übergeordnete Steuerungsfunktion für untergeordnete Steuerungen darstellt. Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte Clients weiter, die zur Bedienung und Beobachtung eines Betriebs der einzelnen Funktionselemente der technischen Anlage dienen.

Die sogenannte ausstellende Zertifizierungsinstanz (CA) kann auch als eine sogenannte "Issuing CA (Certification Authority)" bezeichnet werden und stellt, basierend auf eingehenden Zertifikatsanträgen, Zertifikate für diverse Antragsteller aus, die sie mit ihrem eigenen Zertifikat signiert. Die Vertrauenswürdigkeit der Zertifizierungsinstanz wird dadurch sichergestellt, dass ihr eigenes Zertifikat durch das Zertifikat einer vertrauenswürdigen Wurzelzertifizierungsinstanz (auch als "Root CA" bezeichnet), die sich in einer abgesicherten Umgebung befindet, signiert ist. Die Zertifizierungsinstanz kann nicht nur Zertifikate ausstellen, sondern diese auch widerrufen. Damit die Zertifizierungsinstanz die Revokation bzw. Widerrufung eines Zertifikats vornimmt, ist in der Regel ein entsprechender Revokationsantrag erforderlich. Dieser Revokationsantrag kann beispielsweise von der Anlagenkomponente selbst, deren Zertifikat revoziert werden soll, oder von einem Stellvertreter (z.B. einer Registration Authority, RA) gestellt werden. Alternativ kann das Zertifikat von einem Benutzer direkt an der CA revoziert werden.

Unter einem Zertifikat wird ein digitaler Datensatz nach dem Standard X.509 (RFC 5280) verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden. Bei einem Zertifikat kann es sich um ein operatives Zertifikat, das für eine Kommunikation zwischen verschiedenen Anlagenkomponenten der technischen Anlage verwendet wird, oder um ein komponenteneigenes Zertifikat, welches die Komponente beispielsweise an deren Hersteller oder die jeweilige Kundenumgebung bindet und somit als Herstellergerätezertifikat oder Kundengerätezertifikat bezeichnet wird, handeln.

Eine Sperrliste (engl. Certificate Revocation List, kurz: CRL) ist im vorliegenden Kontext eine Liste von Zertifikaten, die von der Zertifizierungsinstanz erstellt wird. Die Sperrliste umfasst die Zertifikate, die die Zertifizierungsinstanz als ungültig (und damit nicht vertrauenswürdig) widerrufen hat. Es ist im Rahmen der vorliegenden Erfindung auch möglich, dass die technische Anlage über mehrere Zertifizierungsinstanzen verfügt, welche jeweils eine eigene Sperrliste über von ihnen widerrufene Zertifikate erstellen.

Das erfindungsgemäße Leitsystem umfasst einen Sperrlistendienst, der für eine Verteilung der, in Abhängigkeit von einem Grund für eine zuvor erfolgte Revokation eines Zertifikats durch die Zertifizierungsinstanz, für eine Verteilung der von der Zertifizierungsinstanz als Reaktion auf die erfolgte Revokation neu erstellten Sperrliste sorgt.

Der Sperrlistendienst kann hierzu über eine vorgebbare Konfiguration verfügen (diese kann auch automatisch von den verfahrenstechnischen Kommunikationsabhängigkeiten der projektierten Anlagenkomponenten abgeleitet werden), über die beispielsweise festgelegt werden kann, mit welchen Zertifizierungsinstanzen (oder mit welchen internen oder externen Verteilungspunkten) der Sperrlistendienst zum Erwerb von Sperrlisten Kontakt aufnehmen soll.

Die Verteilung der aktualisierten Sperrliste erfolgt nun nicht automatisch an alle in der technischen Anlage vorhandenen Anlagenkomponenten (dies würde einen erheblichen Kommunikationsaufwand bedingen). Vielmehr überträgt der Sperrlistendienst beim Vorliegen bestimmter, vorher definierter Revokationsgründe eine einfache Nachricht an die Anlagenteilnehmer, die ein Entfernen der in dem jeweiligen lokalen Speicher der Anlagenteilnehmer hinterlegten (alten) Sperrliste triggert. Es handelt sich dabei also um eine Aufforderung an die Anlagenteilnehmer, die alte Sperrliste aus ihrem lokalen Speicher zu entfernen.

Dies bewirkt, dass die Anlagenkomponenten bei der nächsten Validierung eines (beliebigen) von der Zertifizierungsinstanz ausgestellten Zertifikats im lokalen Speicher keine Sperrliste der zugehörigen Zertifizierungsinstanz mehr finden können und somit dazu "gezwungen werden", über den zuständigen Sperrlistendienst die aktualisierte Sperrliste zu beziehen. Dadurch "bewirkt" der Sperrlistendienst ein Hinterlegen der neu erstellten Sperrliste in dem lokalen Speicher der von der kommenden Validierung eines Zertifikats betroffenen Anlagenkomponente, ohne dass der Sperrlistendienst pauschal die aktualisierte Sperrliste an alle Anlagenkomponenten übertragen müsste.

Die Reaktion auf einen vorliegenden Revokationsgrund kann im Leitsystem projektiert bzw. konfiguriert sein.

Das erfindungsgemäße Leitsystem erlaubt ein verbessertes Zertifikatsmanagement, indem Sperrlisten präzise und selektiv in den lokalen Speichern der Anlagenkomponenten hinterlegt werden. Damit kann die Erfindung einen fundierten Beitrag zur Aufrechterhaltung des Normalbetriebs und der Verfügbarkeit von technischen Anlagen ohne Gefährdung des Security-Niveaus der Anlagen leisten. Hierbei ist zu beachten, dass die Verfügbarkeit gemäß der internationalen Norm IEC 62443 (als dem führenden Industrial Security Standard) das oberste Schutzziel ist.

Ein Revokationsgrund, der zu einem Entfernen der Sperrliste in dem jeweiligen lokalen Speicher der Anlagenkomponenten führen soll, kann beispielsweise eine Kompromittierung eines privaten Schlüssels einer Anlagenkomponente des Leitsystems oder eine Inhaberänderung des revozierten Zertifikats oder eine Sperre des revozierten Zertifikats oder eine Kompromittierung eines privaten Schlüssels eines Identitätsproviders des revozierten Zertifikats darstellen. Es kann aber auch ein anderer Revokationsgrund (z.B. ein Revokationsgrund nach dem RFC 5280), beispielsweise ein anderer gerätespezifischer und/oder anlagenspezifischer Revokationsgrund sein.

Die obenstehende Aufgabe wird zudem gelöst durch ein Verfahren zum Betreiben einer technischen Anlage, insbesondere einer Fertigungs- oder Prozessanlage, mit einem Leitsystem, wobei das Leitsystem wenigstens eine Zertifizierungsinstanz und Anlagenkomponenten umfasst. Das Verfahren umfasst die folgenden Schritte:
a) Revozieren eines Zertifikats einer Anlagenkomponente durch die Zertifizierungsinstanz;
b) Erstellen einer Sperrliste über bereits revozierte Zertifikate, die das zuvor revozierte Zertifikat umfasst;
c) Ermitteln eines Revokationsgrundes für die zuvor von der Zertifizierungsinstanz vorgenommene Revokation des Zertifikats;
d) Abhängig von dem Revokationsgrund, Bewirken eines Entfernens einer zuvor verteilten und auf dem jeweiligen lokalen Speicher der Anlagenkomponenten hinterlegten Sperrliste;
e) Bewirken eines Hinterlegens einer nach der erfolgten Revokation neu erstellten Sperrliste in dem jeweiligen lokalen Speicher der Anlagenkomponenten.

Dabei kann ein Revokationsgrund, der zu einem Entfernen der Sperrliste in dem jeweiligen lokalen Speicher der Anlagenkomponenten führen soll, eine Kompromittierung eines privaten Schlüssels einer Anlagenkomponente des Leitsystems oder eine Inhaberänderung des revozierten Zertifikats oder eine Sperre des revozierten Zertifikats oder eine Kompromittierung eines privaten Schlüssels eines Identitätsproviders des revozierten Zertifikats darstellen.

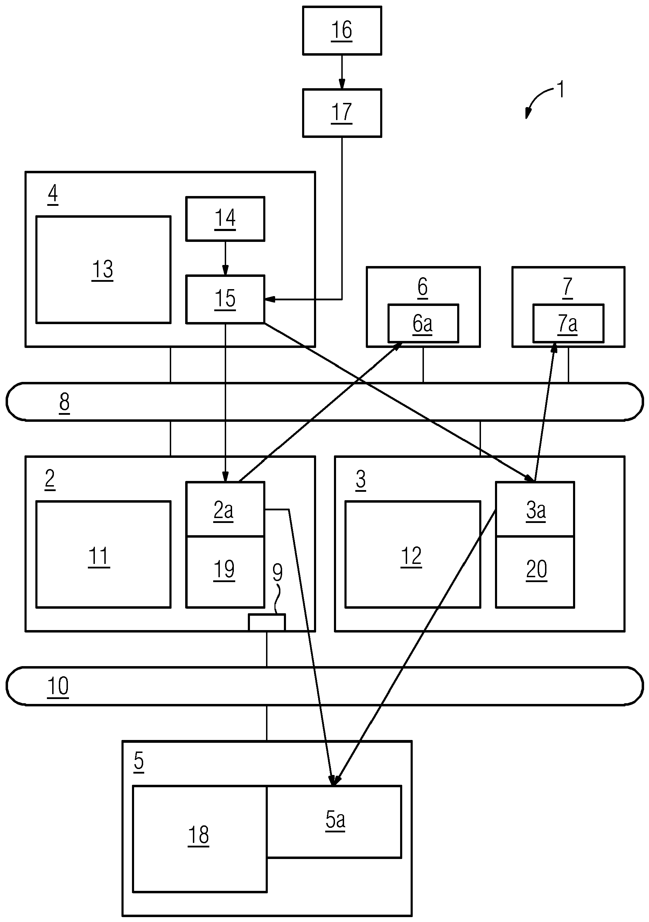

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit der Zeichnung näher erläutert wird.

In der Figur ist ein Teil eines erfindungsgemäßen Leitsystems 1 einer als Prozessanlage, d.h. verfahrenstechnische Anlage, ausgebildeten technischen Anlage dargestellt. Das Leitsystem 1 umfasst einen Engineering Station Server 2, einen Operator Station Server 3, einen Administration Station Server 4, eine Automatisierungsstation 5, einen Engineering Station Client 6 und einen Operator Station Client 7.

Der Operator Station Server 3, der Engineering Station Server 2, der Administration Station Server, der Engineering Station Client 6 und der Operator Station Client 7 sind über einen Terminalbus 8 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 7 mittels des Terminalbus 8 auf den Operator Station Server 3 zugreifen. Ein Projekteur bzw. Bediener hat mittels des Engineering Station Clients 6 mittels des Terminalbus 8 im Kontext eines Engineerings / Projektierens / Konfigurierens der Prozessanlage Zugriff auf den Engineering Station Server 2. Der Terminalbus 8 kann, ohne sich darauf zu beschränken, beispielsweise als Industrial Ethernet ausgebildet sein.

Der Engineering Station Server 2 weist eine Schnittstelle 9 auf, die mit einem Anlagenbus 10 verbunden ist. Über diese Schnittstelle 9 kann der Engineering Station Server 2 mit der Automatisierungsstation 5 sowie mit optional vorhandenen weiteren Komponenten der Prozessanlage kommunizieren. Der Anlagenbus 10 kann, ohne sich darauf zu beschränken, beispielsweise als Industrial Ethernet ausgebildet sein. Die Automatisierungsstation 5 kann mit einer beliebigen Anzahl an Subsystemen (nicht dargestellt) verbunden sein.

Auf dem Engineering Station Server 2 ist eine Automatisierungskonfiguration 11 bezüglich der zu automatisierenden Automatisierungsstation 5 hinterlegt. Dabei kann es sich beispielsweise um einen CFC-Plan handeln. Im Rahmen von sogenannten Engineering-Projekten ist hierbei festgelegt, wie die Automatisierungsstation 5 selbst und mit anderen Anlagenkomponenten wie Geräten, Messumformern, Sensoren, Aktoren oder dergleichen agieren sowie kommunizieren soll.

Auf dem Operator Station Server 3 ist eine Laufzeitumgebung 12 implementiert, die spezielle Programme zum Bedienen und Beobachten der Prozessanlage auf einer geeigneten Plattform ablaufen lässt.

Auf dem Administration Server 4, also einem Verwaltungsserver, ist ein Verwaltungsdienst 13 implementiert, der beispielsweise zur Inventarisierung oder der Planung von Updates für Anlagenkomponenten der Prozessanlage verwendet werden kann. Auf dem Administration Server 4 ist außerdem eine Zertifizierungsinstanz 14 und ein Sperrlistendienst 15 implementiert. Die Zertifizierungsinstanz 14 ist für das Ausstellen und Revozieren von Zertifikaten für die einzelnen Anlagenkomponenten 2, 3, 4, 5, 6, 7 der Prozessanlage zuständig.

Wird ein Zertifikat einer Anlagenkomponente 2, 3, 4, 5, 6, 7 von der Zertifizierungsinstanz 14 für ungültig erklärt, d.h. revoziert, erstellt die Zertifizierungsinstanz 14 eine Sperrliste, auf welcher zumindest das zuvor für ungültig erklärte Zertifikat aufgelistet ist. Der Sperrlistendienst 15 überwacht das Erstellen von neuen Sperrlisten und ruft diese bei Bedarf von der Zertifizierungsinstanz ab. Zusätzlich kann der Sperrlistendienst 15 auch Sperrlisten von einer externen Zertifizierungsinstanz 16 (außerhalb der Prozessanlage) erhalten, welche beispielsweise an einem Verteilungspunkt 17 hinterlegt sind.

Der Sperrlistendienst 15 entnimmt der Sperrliste den Grund für die zuvor erfolgte Revokation eines Zertifikats. Der Revokationsgrund kann beispielsweise mittels spezieller Überwachungsdienste 18, 19, 20 ermittelt werden, welche die von Anlagenkomponenten 2, 3, 4, 5, 6, 7 an die Zertifizierungsinstanz 14 gestellten Revokationsanträge überwachen. Abhängig von dem Revokationsgrund bewirkt der Sperrlistendienst 15 ein Entfernen einer zuvor verteilten und auf dem jeweiligen lokalen Speicher der Anlagenkomponenten hinterlegten Sperrliste. "Verteilt" bedeutet dabei nicht zwingend, dass die Sperrliste zuvor aktiv an die Anlagenkomponenten 2, 3, 4, 5, 6, 7 übertragen wurde. Vielmehr verfügen die Anlagenkomponenten 2, 3, 4, 5, 6, 7 vorteilhafterweise über einen Sperrlistenverteildienst 2a, 3a, 5a, 6a, 7a, welcher die Aufgabe hat, eine aktualisierte Sperrliste von dem Sperrlistendienst 15 zu beziehen.

Wenn nun eine Sperrliste von einem lokalen Speicher einer Anlagenkomponente 2, 3, 4, 5, 6, 7 entfernt worden ist und die Analgenkomponente 2, 3, 4, 5, 6, 7 zum Zwecke des Aufbaus einer Kommunikationsbeziehung mit einer anderen Anlagenkomponente 2, 3, 4, 5, 6, 7 deren Zertifikat validieren will, "merkt" sie, dass sie keine aktuelle Sperrliste mehr vorliegen und lässt sich, insbesondere durch den Sperrlistenverteildienst 2a, 3a, 5a, 6a, 7a, eine neue, aktuelle Sperrliste von dem Sperrlistendienst 15 besorgen.

## Patentansprüche

1. Leitsystem (1) für eine technische Anlage, insbesondere eine Fertigungs- oder Prozessanlage, das wenigstens eine Zertifizierungsinstanz (14, 16) und Anlagenkomponenten (2, 3, 4, 5, 6, 7) umfasst,
wobei die Zertifizierungsinstanz (14, 16) für eine Ausstellung und eine Revokation von Zertifikaten für die Anlagenkomponenten (2, 3, 4, 5, 6, 7) zuständig ist,
und wobei die Zertifizierungsinstanz (14, 16) dazu ausgebildet ist, eine Sperrliste über bereits revozierte Zertifikate zu erstellen, die in dem Leitsystem (1) verteilbar ist,
und wobei in dem Leitsystem (1) ein Sperrlistendienst (15) implementiert ist, welcher zur Verteilung der Sperrliste an die Anlagenkomponente (2, 3, 4, 5, 6, 7) ausgebildet und vorgesehen ist,
und wobei die Anlagenkomponenten (2, 3, 4, 5, 6, 7) jeweils einen lokalen Speicher umfassen, in welchem die zuvor verteilte Sperrliste ablegbar ist,
**dadurch gekennzeichnet, dass**
der Sperrlistendienst dazu ausgebildet ist, nach einer erfolgten Revokation eines Zertifikats einen Revokationsgrund zu ermitteln, insbesondere durch Entnehmen aus einem Revokationsantrag oder einer entsprechenden Benutzereingabe, und, abhängig von dem Revokationsgrund, ein Entfernen einer zuvor verteilten und auf dem jeweiligen lokalen Speicher der Anlagenkomponenten (2, 3, 4, 5, 6, 7) hinterlegten Sperrliste zu triggern und dadurch ein Hinterlegen einer nach der erfolgten Revokation neu erstellten Sperrliste in dem jeweiligen lokalen Speicher der Anlagenkomponenten (2, 3, 4, 5, 6, 7) zu bewirken.

2. Leitsystem (1) nach Anspruch 1, bei dem ein Revokationsgrund, der zu einem Entfernen der Sperrliste in dem jeweiligen lokalen Speicher der Anlagenkomponenten (2, 3, 4, 5, 6, 7) führen soll, eine Kompromittierung eines privaten Schlüssels einer Anlagenkomponente (2, 3, 4, 5, 6, 7) des Leitsystems (1) oder eine Inhaberänderung des revozierten Zertifikats oder eine Sperre des revozierten Zertifikats oder eine Kompromittierung eines privaten Schlüssels eines Identitätsproviders des revozierten Zertifikats darstellt.

3. Verfahren zum Betreiben einer technischen Anlage, insbesondere einer Fertigungs- oder Prozessanlage, mit einem Leitsystem (1), wobei das Leitsystem (1) wenigstens eine Zertifizierungsinstanz und Anlagenkomponenten (2, 3, 4, 5, 6, 7) umfasst, das Verfahren umfassend:
a) Revozieren eines Zertifikats einer Anlagenkomponente (2, 3, 4, 5, 6, 7) durch die Zertifizierungsinstanz (14, 16);
b) Erstellen einer Sperrliste über bereits revozierte Zertifikate, die das zuvor revozierte Zertifikat umfasst;
c) Ermitteln eines Revokationsgrundes für die zuvor von der Zertifizierungsinstanz (14, 16) vorgenommene Revokation des Zertifikats;
d) Abhängig von dem Revokationsgrund, Bewirken eines Entfernens einer zuvor verteilten und auf dem jeweiligen lokalen Speicher der Anlagenkomponenten (2, 3, 4, 5, 6, 7) hinterlegten Sperrliste;
e) Bewirken eines Hinterlegens einer nach der erfolgten Revokation neu erstellten Sperrliste in dem jeweiligen lokalen Speicher der Anlagenkomponenten (2, 3, 4, 5, 6, 7).

4. Verfahren nach Anspruch 3, bei dem ein Revokationsgrund, der zu einem Entfernen der Sperrliste in dem jeweiligen lokalen Speicher der Anlagenkomponenten (2, 3, 4, 5, 6, 7) führen soll, eine Kompromittierung eines privaten Schlüssels einer Anlagenkomponente (2, 3, 4, 5, 6, 7) des Leitsystems (1) oder eine Inhaberänderung des revozierten Zertifikats oder eine Sperre des revozierten Zertifikats oder eine Kompromittierung eines privaten Schlüssels eines Identitätsproviders des revozierten Zertifikats darstellt.

## Claims

1. Control system (1) for a technical installation, in particular a production installation or process installation that comprises at least one certification authority (14, 16) and installation components (2, 3, 4, 5, 6, 7),
wherein the certification authority (14, 16) is responsible for issuing and revoking certificates for the installation components (2, 3, 4, 5, 6, 7),
and wherein the certification authority (14, 16) is embodied for the purpose of creating a certificate revocation list regarding certificates that are already revoked and said certificate revocation list can be distributed in the control system (1),
and wherein a certificate revocation list service (15) is implemented in the control system (1) and said certificate revocation list service is embodied and provided so as to distribute the certificate revocation list to the installation component (2, 3, 4, 5, 6, 7),
and wherein the installation components (2, 3, 4, 5, 6, 7) in each case comprise a local storage device in which it is possible to file the previously distributed certificate revocation list,
**characterised in that**
the certificate revocation list service is embodied for the purpose of determining a revocation reason after a certificate is revoked, in particular by drawing on a revocation application or a corresponding user input, and in dependence upon the revocation reason, triggering a removal of a previously distributed certificate revocation list that is stored on the respective local storage device of the installation components (2, 3, 4, 5, 6, 7) and as a consequence after the revocation has been performed initiating a storing of a newly created certificate revocation list in the respective local storage device of the installation components (2, 3, 4, 5, 6, 7).

2. Control system (1) according to claim 1 in which a revocation reason that is to lead to a removal of the certificate revocation list in the respective local storage device of the installation components (2, 3, 4, 5, 6, 7) represents a compromising of a private key of an installation component (2, 3, 4, 5, 6, 7) of the control system (1) or a change of owner of the revoked certificate or a blocking of the revoked certificate or a compromising of a private key of an identity provider of the revoked certificate.

3. Method for operating a technical installation, in particular a production installation or process installation, having a control system (1), wherein the control system (1) comprises at least one certification authority and installation components (2, 3, 4, 5, 6, 7), the method comprising:
a) revoking a certificate of an installation component (2, 3, 4, 5, 6, 7) by the certification authority (14, 16);
b) creating a certificate revocation list regarding certificates that are already revoked and said certificate revocation list comprises the previously revoked certificate;
c) determining a revocation reason for the revocation of the certificate, which is previously performed by the certification authority (14, 16);
d) depending on the revocation reason, initiating a removal of the previously distributed certificate revocation list that is stored on the respective local storage device of the installation components (2, 3, 4, 5, 6, 7);
e) initiating a storing of a newly created certificate revocation list in the respective local storage device of the installation components (2, 3, 4, 5, 6, 7) after the revocation is performed.

4. Method according to claim 3 in which a revocation reason that is to lead to a removal of the certificate revocation list in the respective local storage device of the installation components (2, 3, 4, 5, 6, 7) represents for example a compromising of a private key of an installation component (2, 3, 4, 5, 6, 7) of the control system (1) or a change of owner of the revoked certificate or a blocking of the revoked certificate or a compromising of a private key of an identity provider of the revoked certificate.

## Revendications

1. Système (1) de conduite d'une installation technique, notamment d'une installation de fabrication ou de processus, qui comprend au moins une instance (14, 16) de certification et des composants (2, 3, 4, 5, 6, 7),
dans lequel l'instance (14, 16) de certification est compétente pour un établissement et une révocation de certificats pour les composants (2, 3, 4, 5, 6, 7) d'installation,
et dans lequel l'instance (14, 16) de certification est constituée pour établir, par des certificats déjà révoqués, une liste d'interdiction, qui peut être distribuée dans le système (1) de conduite,
et dans lequel il est prévu dans le système (1) de conduite un service (15) de liste d'interdiction, qui est constitué et prévu pour la distribution de la liste d'interdiction aux composants (2, 3, 4, 5, 6, 7) d'installation,
et dans lequel les composants (2, 3, 4, 5, 6, 7) d'installation comprennent chacun une mémoire locale, dans laquelle peut être mise la liste d'interdiction distribuée auparavant,
**caractérisé en ce que**
le service de liste d'interdiction est constitué pour déterminer, après qu'une révocation d'un certificat a eu lieu, un motif de révocation, notamment à partir d'une demande de révocation ou d'une entrée d'utilisateur correspondante et, en fonction du motif de révocation, pour déclencher un retrait d'une liste d'interdiction distribuée auparavant et mise sur la mémoire locale respective des composants (2, 3, 4, 5, 6, 7) d'installation et provoquer ainsi une mise en mémoire dans la mémoire locale respective des composants (2, 3, 4, 5, 6, 7) d'installation d'une liste d'interdiction établie nouvellement, après avoir effectué la révocation.

2. Système (1) de conduite suivant la revendication 1, dans lequel un motif de révocation, qui doit conduire à un retrait de la liste d'interdiction dans la mémoire locale respective des composants (2, 3, 4, 5, 6, 7) d'installation, représente une compromission d'une clé privée d'un composant (2, 3, 4, 5, 6, 7) d'installation du système (1) de conduite ou une modification de titulaire du certificat révoqué ou une interdiction du certificat révoqué ou une compromission d'une clé privée d'un fournisseur d'identité du certificat révoqué.

3. Procédé pour faire fonctionner une installation technique, notamment une installation de fabrication de processus, par un système (1) de conduite, dans lequel le système (1) de conduite comprend au moins une instance de certification et des composants (2, 3, 4, 5, 6, 7) d'installation, procédé dans lequel :
a) on révoque un certificat d'un composant (2, 3, 4, 5, 6, 7) d'installation par l'instance (14, 16) de certification ;
b) on établit une liste d'interdiction par des certificats déjà révoqués, qui comprend le certificat révoqué auparavant ;
c) on détermine un motif de révocation, pour la révocation du certificat effectué auparavant par l'instance (14, 16) de certification ;
d) en fonction du motif de révocation, on provoque un retrait d'une liste d'interdiction distribuée auparavant et mise dans la mémoire locale respective des composants (2, 3, 4, 5, 6, 7) d'installation ;
e) on provoque une mise dans la mémoire locale respective des composants (2, 3, 4, 5, 6, 7) d'installation d'une liste d'interdiction établie nouvellement après avoir effectué la révocation.

4. Procédé suivant la revendication 3, dans lequel un motif de révocation, qui doit conduire à un retrait de la liste d'interdiction dans la mémoire locale respective des composants (2, 3, 4, 5, 6, 7) d'installation, représente une compromission d'une clé privée d'un composant (2, 3, 4, 5, 6, 7) d'installation du système (1) de conduite ou une modification de titulaire du certificat révoqué ou une interdiction du certificat révoqué ou une compromission d'une clé privée d'un fournisseur d'identité du certificat révoqué.
